# EUROPEAN PATENT SPECIFICATION

(11) **EP 1 143 460 B1**
(45) Date of publication and mention of the grant of the patent: **11.11.2009**
(21) Application number: 01108390.4
(22) Date of filing: 03.04.2001
(51) Int. Cl.: H01C 7/12, A01M 29/00

(54) **Surge arrester**
Überspannungsableiter
Limiteur de surtension

(30) Priority: 07.04.2000 JP 2000106788
(43) Date of publication of application: 10.10.2001
(73) Proprietor: KABUSHIKI KAISHA TOSHIBA, Kawasaki-shi (JP)
(72) Inventor: Ishizaki, Yoshihiro, Tokyo 105-8001 (JP); Kan, Masahiro, Tokyo 105-8001 (JP); Fukano, Takato, Tokyo 105-8001 (JP); Shimagami, Keisuke, Tokyo 105-8001 (JP); Sano, Fukuo, Tokyo 105-8001 (JP); Suzuki, Hironori, Tokyo 105-8001 (JP); Narita, Hiroyoshi, Tokyo 105-8001 (JP)
(74) Representative: Henkel, Feiler & Hänzel

(56) References cited:
- WO-A-97/39462
- DE-A- 2 843 639
- US-A- 4 571 660
- US-A- 4 989 115
- US-A- 5 602 710
- US-A- 5 625 523
- US-A- 5 912 611
- VITET S ET AL: "THERMAL STRESS ON ZNO SURGE ARRESTERS IN POLLUTED CONDITIONS PART II: FIELD TEST RESULTS" IEEE TRANSACTIONS ON POWER DELIVERY,US,IEEE INC. NEW YORK, vol. 7, no. 4, 1 October 1992 (1992-10-01), pages 2023-2036, XP000298215 ISSN: 0885-8977
- VOLKER HINRICHSEN: "Ueberspannungsalbleiter und Ueberspannungsschutz" UNIVERSITY LECTURE, - November 2004 (2004-11) pages 1-39, Seminar "Isolationskoordination", Deidesheim

## Description

The present invention relates to a surge arrester according to the preamble portion of claim 1 using a nonlinear resistive element, which is mainly composed of a zinc oxide. Further, the present invention particularly relates to a surge arrester of a type that a resin (polymer) material is used as an insulative container.

Generally, a surge arrester is connected between an electric power system and the earth. In the case that an unusual voltage, for example, a thunder surge occurs in the electric power system by lighting or the like, the surge arrester prevents the electric power system and an electric machine from being damaged by the unusual voltage.

As an internal element of this surge arrester, a nonlinear resistive element is used, which represents an insulating property when a normal voltage is applied and represents a low resistance property when the unusual voltage is applied. Depending on a property of this nonlinear resistive element, when the unusual voltage occurs, a discharge current flows through the surge arrester, so that the unusual voltage is limited. Then, when the voltage returns to a normal state, the discharge current immediately stops and the voltage returns to original insulated state.

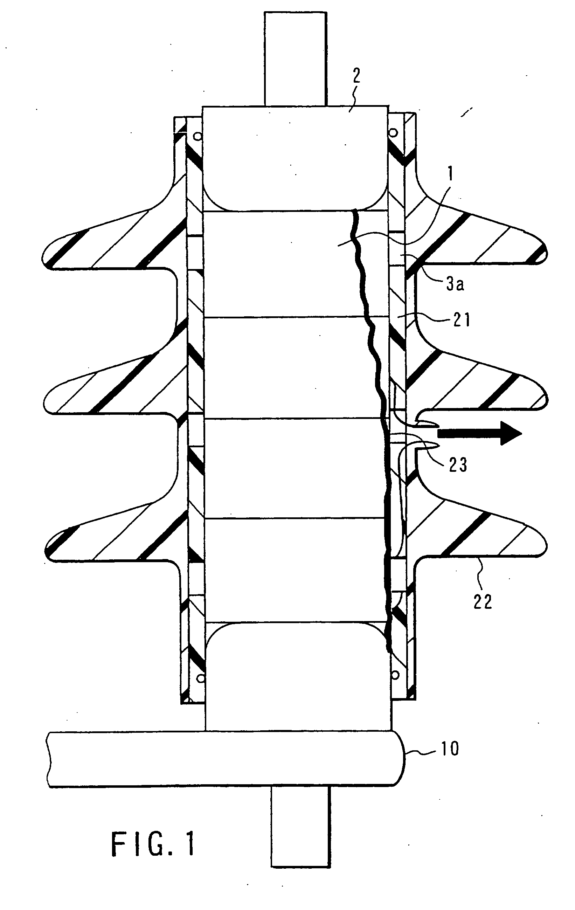

FIG. 1 is a schematic cross sectional view for showing an example of a conventional surge arrester. As shown in FIG. 1, a plurality of nonlinear resistive elements (zinc oxide elements) 1, which are mainly composed of zinc oxides, are stacked in a predetermined direction, so that a lamination layer is formed. Then, disposing electrode terminals 2 at an upper terminal and a lower terminal of this lamination layer, internal elements of the surge arrester are formed.

Further, the surge arrester is configured in such a manner of housing these internal elements of the surge arrester in an insulation tube 21 having a space 3a for discharging a voltage at their side face and covering this insulation tube 21 with an insulative container 22 made of a polymer resin.

According to the surge arrester configured as described above, in the case that the nonlinear resistive elements 1 are damaged by the voltage, which exceeds its obligation, and further, an earth fault current flows through the internal elements within the surge arrester, the current which originally flowed through the nonlinear resistive elements 1 in the internal elements in the surge arrester turns out an arc 23. In this case, depending on the generation of the arc 23, an inner voltage of the insulation tube 21 increases and this increased voltage is discharged from the space 3a for discharging a voltage through the insulative container 22, so that the surge arrester is prevented from bursting up.

The insulative container 22 made of a polymer resin is particularly referred to as a polymer type surge arrester. Such a polymer type surge arrester has more flexibility in design compared with a surge arrester by the use of an insulative container made of a ceramic. Further, since this polymer type surge arrester has an advantage such as a narrower gap within the insulative container 22 or the like, it has a good prospect with respect to both of productivity and capability, so that development of this polymer type surge arrester is further expected.

However, a conventional surge arrester as shown in FIG. 1 involves the following problems. At first, as shown in FIG. 1, the space 3a for discharging a voltage functions as an outlet of the arc 23 which is generated within the insulative container 22. However, since the conventional surge arrester is configured on the insulation tube 21, it should secure the strength in an axial of the insulation tube 21. Therefore, its position is materially limited. The space 3a which only can be disposed on a limited position is not capable of exerting the discharging function sufficiently, so that there is a possibility such that the electrode terminals 2 deviate by a high voltage within the insulative container 22 and the surge arrester internal elements such as the nonlinear resistive elements 1 or the like is darted out from the insulation tube 21 and the insulation tube 21 is blown out.

Alternatively, in a constitution such that the insulative container 22 is bonded to a circumference of the insulation tube 21 as shown in FIG. 1, if the surge arrester in FIG. 1 has been used for long time, it is feared that steam is infiltrated from the bonded face and moisture is accumulated in a space in the insulative container 22, so that a property of the surge arrester is decreased.

Further, according to the surge arrester by the use of the insulative container 22 made of a polymer resin, since the feathered creature such as a crow pecks a cap of the insulative container 22, this involves a problem such that the insulating property of the surge arrester is decreased.

US-A-5912611 discloses a surge arrester on which the preamble portion of claim 1 is based. This surge arrester comprises a stack of a plurality of cylindrical varistor blocks preferably made of metal oxide which are arranged one after the other in the axial direction between an upper end electrode and a lower end electrode and surrounded by an elongated, electrically insulating external casing of rubber or another polymeric material. The end electrodes are interconnected by means of at least three clamping members of an insulating material to achieve the required contact pressure between the different elements in the stack. The clamping members are formed as electrically insulating straps wound of continuous glass-fiber strand with a plurality of turns and embedded into thermosetting resin.

WO 97/39462 discloses a surge arrester whose reliability is increased by using a woven fiberglass fabric wrapped around the resistive nonlinear elements.

An object of the present invention is to provide a surge arrester, which can relieve the internal pressure, and whose failure is not likely to cause an explosive failure, when the non-linear resistive element is broken up due to the exceed voltage and the earth current flows within the surge arrester and has an excellent property for discharging voltage, an excellent property for boiling resistance, safety and a high reliability of long duration without infiltrating the moisture.

Another aspect of the present invention is to provide a surge arrester, which is also capable of preventing a damage by the feathered creature such as a crow and has a higher reliability in addition to prevention of burst up, shatter and infiltration of the moisture.

In order to attain the above object, the surge arrester of the present invention in accordance with claim 1 comprises at least one nonlinear resistive element made mainly of zinc oxide and having two ends and one axis;
at least two electrode terminals electrically connected to the two ends of the at least one nonlinear resistive element, respectively;
a plurality of elongated insulating supports arranged around the nonlinear resistive element, extending parallel to the axis of the nonlinear resistive element and spaced apart from one another, each insulating support having both ends secured to the electrode terminals; and
a molded insulating container made of silicone resin , surrounding the nonlinear resistive element and the insulating supports, and exposing parts of the electrode terminals, wherein the nonlinear resistive element is covered by a mesh made of a fiber reinforced plastic.

According to this constitution, it is possible to form an opening which extends in a direction of an axis of the surge arrester between the insulation supporting elements, so that, in the case that the nonlinear resistive elements 1 are damaged by the voltage which exceeds its allowance, and further, an earth fault current flows through the internal elements in the surge arrester, the internal pressure is capable of being discharged sufficiently from the opening, which extends in a direction of its axis. Therefore, an excellent pressure discharging property can be obtained and burst up and shatter of the surge arrester can be prevented.

Additionally, since the construction of the surge arrester is simple and a silicone resin with an excellent flow property is used, the surge arrester is capable of easily being molded in various shapes without applying excess power to internal elements of the surge arrester, so that gaps and air bubbles in an internal of the surge arrester can be decreased. Therefore, an excellent property for boiling resistance can be obtained and the moisture is prevented from being infiltrated in an internal of the surge arrester under a harsh condition.

The usage of FRP enables to improve the strength of insulation supporting of the internal elements of the surge arrester. Particularly, in the case that the nonlinear resistive element is covered with a mesh fiber reinforced plastic (FRP) it is possible to prevent small fractions of the damaged zinc oxide element from flying out from the opening between the insulation supporting elements even when the nonlinear resistive element is damaged by the short circuit current.

According to the surge arrester of an embodiment of the present invention in accordance with claim 2, the arrester according to claim 1has insulating supports secured to the electrode terminals by bolts, projections protruding from the ends of the insulating support and holes made in the electrode terminals or in that the insulating supports are bonded to the electrode terminals.

According to the above constitution, since the structure of the fixed portions can be simplified as much as possible, the surge arrester can be easily composed. Particularly, in the case that they are fixed only by fitting and bonding, the number of parts can be omitted. Further, in this case, since there is no step for fixing by a bolt, the composing operation can be easier and economical efficiency becomes higher.

According to the surge arrester of an embodiment of the present invention in accordance with claim 3, the arrester according to claim 1 or 2, wherein a metal plate is interposed between at least one of the electrode terminals and the nonlinear resistive element, the at least one of the electrode terminals has a screw hole, and a screw is set in screw engagement with the screw hole and functions as a jack when rotated to push the metal plate.

According to the above constitution, it is possible to provide tensility in an axial direction to the insulation supporting element, which is fixed between the electrode terminals, so that the nonlinear resistive element can be compressed and fixed.

According to the surge arrester of an embodiment of the present invention in accordance with claim 4, the arrester according to any one of claims 1 to 3, wherein a plurality of springs of different strengths are provided between one of the electrode terminals and the nonlinear resistive element and absorb compressed load acting on said non-linear resistive element with expansion and contraction of the insulating supports.

According to the above constitution, a compression loading which is applied to the nonlinear resistive element can be appropriately managed, since the usage of a plurality of springs with various strengths enables to absorb the compression loading which is applied to the nonlinear resistive element by expansion and contraction depending on the temperature change of the insulates supporting element with a larger coefficient of thermal expansion by using a plurality of springs. In this case, there is also an advantage such that the height and the dimension of the surge arrester are not much influenced.

According to the surge arrester of an embodiment of the present invention in accordance with claim 5, the arrester according to any one of claims 1 to 4, wherein the insulating supports are made of fiber reinforced plastic.

According to the surge arrester of an embodiment of the present invention in accordance with claim 7, the arrester according to any one of claims 1 to 6, further comprising a method epoxy resin layer covering a circumferential surface of each of the insulating supports.

According to the constitutions of claim 7, it becomes difficult for the gaps and the air bubbles to be generated around the internal elements of the surge arrester and around the insulation supporting element depending on an excellent adhesive property between an epoxy resin and a silicone resin. Therefore, a property for boiling resistance can be improved, so that it is possible to efficiently prevent the moisture from being infiltrated within the surge arrester.

According to the surge arrester of an embodiment of the present invention in accordance with claim 8, the arrester according to any one of claims 1 to 7, wherein the insulating container has a substantially polygonal cross section, and the insulating supports are arranged at every other side or every other apex of the substantially polygonal cross section.

According to the surge arrester of an embodiment of the present invention in accordance with claim 9, the arrester according to claim 8, wherein each side of the insulating container that contacts one insulating support is thicker than any other side of the insulating container.

According to the surge arrester of an embodiment of the present invention in accordance with claim 10, the arrester according to claim 8, wherein the any side of the insulating container that contacts one insulating support is 2 to 5 mm at the thinnest part.

According to the above constitutions of claims 8 to 10, providing the strength to the vertexes of a polygonal container made of a silicone resin and the sides having the insulation supporting element of a polygonal container made of a silicone resin and making the sides of the opening without the insulation supporting element thinner, it becomes possible to improve the discharge pressure property. It is desirable that the thickness of the silicone resin is in the range of 2 and 5 mm as described in claim 10. This is why the silicone resin is easily damaged when the thickness thereof is less than 2 mm and the internal pressure thereof is increased if the thickness thereof exceeds 5 mm when the short circuit current flows.

According to the surge arrester of an embodiment of the present invention in accordance with claim 11, the arrester according to any one of claims 1 to 10, wherein annular fins are provided on an outer circumferential surface of the insulating container, are arranged at intervals of at most 5 cm in an axial direction of the insulating container, and have a width of at least 5 cm.

According to the surge arrester of an embodiment of the present invention in accordance with claim 12, the arrester according to any one of claims 1 to 11, wherein a pattern is provided on an outer circumferential surface of the insulating container representing a natural enemy of birds that may fly toward the arrester.

According to the surge arrester of an embodiment of the present invention in accordance with claim 13, the arrester according to any one of claims 1 to 12, further comprising a bracket for fastening the arrester to a pole, the bracket having a plurality of pyramidal projections on one surface.

According to the above constitutions described in claims 11 to 13, it is possible to prevent the damages of the insulative containers made of a silicone resin by the feathered creature such as a crow, so that it is also possible to prevent the moisture from inserting into an internal of the surge arrester. In other words, making a length of the cap not less tan 5 cm and making a spacing thereof not more than 5 cm prevent the peckers of the birds from reaching to a drum of the insulative containers, so that the damages to the drum of the insulative containers can be prevented. Alternatively, by representing a mesh pattern, a pattern such that complementary colors are distributed alternatively and a pattern representing a natural enemy of potential birds which may come by air on surfaces of the insulative containers, it is possible to prevent the birds from approaching to the insulative containers. Further, by disposing a concavo-convex portion including an angular portion is formed on an arm of a bracket, on which the surge arrester, it is possible to prevent the birds from settling in the vicinity of the surged arrester.

As described above, according to the present invention, since the surged arrester comprises a plurality of slender insulation supporting elements, which are disposed to a circumference of the nonlinear resistive element and are fixed to the electrode terminals and an insulative container, which is shaped in a mold by a silicone resin around the nonlinear resistive element and the insulation supporting elements, it is possible to discharge the internal pressure sufficiently and it is possible to prevent the surged arrester from bursting up and shatter in the case that the nonlinear resistive element is damaged by the excessive voltage, the earth fault current flows through the internal of the surged arrester and the moisture is not infiltrated in the internal of the surged arrester. Therefore, the present invention is capable of providing a surged arrester having an excellent discharge pressure property, an excellent property for boiling resistance, safety and a high reliability of long duration.

According to the present invention, in addition to the above constitutions, by dimension of the caps of the insulation containers made of a silicone resin, representing a pattern on the surface of the insulative containers and devising the arm or the like of the bracket, on which the surge arrester is disposed, it is possible to provide a surged arrester having a higher reliability, which is capable of preventing the damages by the feathered creature such as a crow as well as preventing the burst out thereof, shatter thereof and insertion of the moisture therein.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic cross sectional view for showing an example of a conventional surge arrester;
FIG. 2A is a schematic cross sectional view for showing a surge arrester according to a first embodiment of the present invention;
FIG. 2B is a cross sectional view in the direction of 2B - 2B arrow of FIG. 2A;
FIG. 2C is an enlarged cross sectional view in the direction of 2C - 2C arrow of FIG. 2B;
FIG. 3A is a schematic cross sectional view for showing a surge arrester according to a second embodiment of the present invention;
FIG. 3B is a plan view for showing a surge arrester according to a second embodiment of the present invention;
FIG. 3C is an enlarged cross sectional view in the direction of 3C - 3C arrow of FIG. 3B;
FIG. 4A is a schematic cross sectional view for showing a surge arrester according to a third embodiment of the present invention;
FIG. 4B is a plan view for showing a surge arrester according to a third embodiment of the present invention;
FIG. 4C is an enlarged cross sectional view in the direction of 4C - 4C arrow of FIG. 4A;
FIG. 4D is an enlarged cross sectional view in the direction of 4D - 4D arrow of FIG. 4A; and
FIG. 5 is a schematic cross sectional view for showing a surge arrester according to a fourth embodiment of the present invention.

An embodiment applying a surge arrester according to the present invention will be specifically explained with reference to FIGS. 1 to 4 below.

### [First embodiment]

### (Constitution)

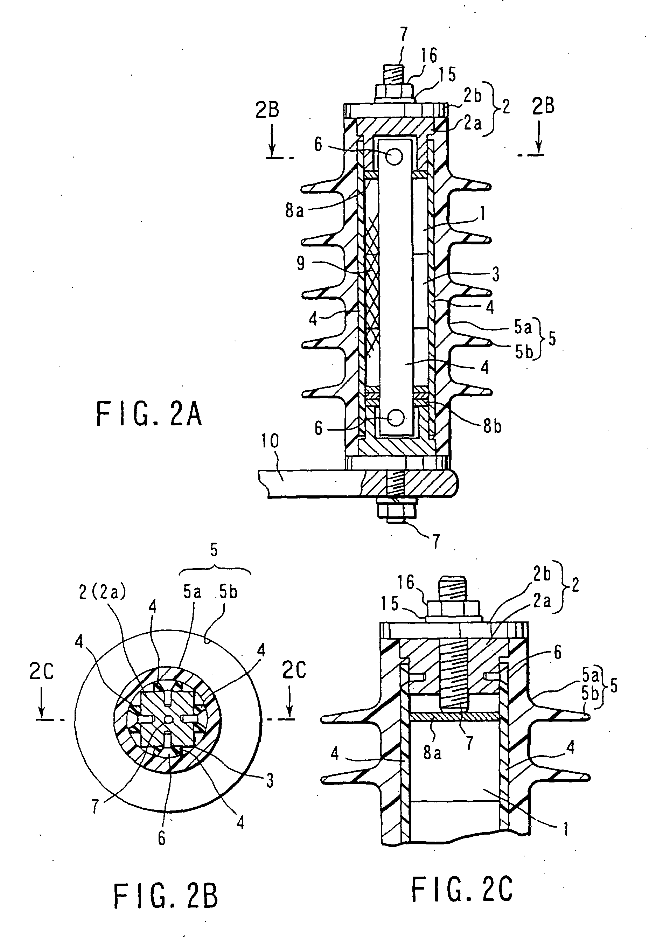

FIGS. 2A to 2C are views for showing an example of a surge arrester applying a first embodiment of the present invention. As shown in FIGS. 2A to 2C, a lamination layer is formed by laminating a plurality of nonlinear resistive elements (zinc oxide elements) 1 in a predetermined direction and the surge arrester internal elements are formed by disposing electrode terminal 2, which are composed of a fixing portion 2a and a plate portion 2b, at an upper edge and a lower edge of this lamination layer, respectively.

A plurality of slender and plate type insulation supporting elements 4 which have rigidity and are made of fiber reinforced plastic (FRP) are disposed around the nonlinear resistive elements 1 in such a manner that they define a plurality of spaces 3, which extend in an axis direction of the surge arrester and these insulation supporting elements 4 are fixed to the electrode terminals 2 on the opposite sides. Then, by molding a periphery of the nonlinear resistive elements 1 and the insulation supporting elements 4 with a silicone resin which has an excellent flow property, an insulative container 5 which is composed of a drum portion 5a and a cap portion 5b is formed.

The insulative container 5 is molded as described below. The electrode terminals 2 are connected to the opposite edges in an axial direction of the nonlinear resistive elements 1. Simultaneously, housing the electrode terminals 2, to which a plurality of the insulation supporting elements 4 are fixed, in a mold and filling a liquid silicone resin in this mold, the insulative containers 5 and the nonlinear resistive elements 1 are entirely surrounded. Then, the insulative container 5 is molded so that the portions of the electrode terminals 2 are exposed.

More particularly, as shown in FIG. 2B and FIG. 2C, the insulation supporting element 4 is fixed to the fixing portion 2a of the electrode terminal 2, for example, by a plate screw 6. This fixation may be performed by, a knocking pin, such that a metal is spread in a rivet shape in the inner space by knocking with a hammer. In this case of using this knocking pin, since the air space of a screw hole or the like is vanished, it becomes possible to fix them steady without blurring. Although the insulation supporting element 4 is fixed to respective one position of the upper and lower edges by plate screw 6 in FIGS. 2A to 2C, it is desirable that the insulation supporting element 4 is fixed to more than two positions of the upper and lower edges, respectively. This is the reason why the fixing portion is not rotated as a pin with respect to the loading from a right beside when the insulation supporting element 4 is fixed to more than two positions of the upper and lower edges, so that it is possible to prevent the transformation of the surge arrester. On the contrary, in the case that the electrode terminal 2 is provided with the load from right beside, there is a possibility that the fixing portion is rotated as a pin, so that the surge arrester is transformed when the insulation supporting element 4 is fixed to respective only one position of the upper and lower edges.

Embedded screws 7 for adjusting spacing are disposed on the electrode terminals 2 on the opposite sides, respectively, so that they are capable of being screwed. Specifically, a screw hole (not illustrated), in which the embedded screw 7 is infiltrated, is defined on the fixing portion 2a and the plate portion 2b, which compose the electrode terminal 2 and a female screw (not illustrated) is formed on this screw hole. By defining, for example, a hexagonal hole in an axial direction of the edge, inserting a hexagonal wrench in the hexagonal hole and rotating this hexagonal wrench, it is possible to adjust a prominent length of the embedded screw 7, which is fitted in the female hole. Further, a nut 16 is fitted in a portion, which is prominent from the electrode terminal 2 of the embedded screw 7, through a chip plate 15 in order to connect a lead wire for connecting the surge arrester, for example, between the non-illustrated electric system and the earth.

Here, a metal caul 8a is disposed between the electrode terminal 2 at the upper edge and the nonlinear resistive elements 1. The surge arrester is constructed when the metal caul 8a is pressed by the screw 7.

On the other hand, a plurality of springs 8b with various strengths are arranged between the electrode terminal 2 at the lower edge and the nonlinear resistive elements 1. A space for compression of a metal caul 8a is left between the electrode terminal 2 at the upper edge and the nonlinear resistive elements 1. Further, as shown in FIG. 2A, the nonlinear resistive elements 1 are covered with a mesh 9 made of the fiber reinforced plastic (FRP). Alternatively, in the drawings, the reference numeral 10 shows an arm 10 of a bracket for disposing the surge arrester on an electric pole or the like.

### (Operation)

With respect to the surge arrester according to the first embodiment, which is constructed as above, in order to specifically prove the operation thereof, the surge arrester is manufactured in actual and a short circuit test and a salt water boiling test are carried out on the basis of an international standard IEC (60099-4). As a result, good results can be obtained from both tests. The conditions and results of these tests and the reasons why such results are obtained will be sequentially described below.

At first, the short circuit test was carried out by applying the excessive voltage for a short time and carrying the short circuit current, 10 kA, for 0.2 s after electrically destroying the nonlinear resistive elements 1. In this short circuit test, a side face of the insulative container 5 is torn, so that the rising inner pressure is capable of being effectively released.

Next, in the salt water boiling test, soaking the surge arrester in the boiled salt water having the concentration of 0.1 % for not less than forty hours, the change of the electric property before and after the test was evaluated with respect to the operation start voltage (the generative voltage upon flowing the current of DC 1 mA) and the limitation voltage (the generative voltage upon flowing the thunder current of 10 kA). In this salt water boiling test, the electric property was decreased not more than 1% in both cases.

The reasons why the result of the short circuit test is especially excellent among the above results will be roughly considered below. In other words, according to the first embodiment, since the slender and plate type insulation supporting elements 4 are used, the space 3, which extends to the axis direction of the surge arrester, is defined. Further, there is nothing to suppress the rising of the inner pressure upon carrying the short circuit current, so that the inner pressure is extremely not risen. In other words, upon discharging the pressure, the fragments or the like of the nonlinear resistive elements 1 did not fly out to the outside, so that it was deemed that the inner pressure was capable of being sufficiently discharged from the space 3, which extended to the axis direction of the surge arrester.

Particularly, since the nonlinear resistive elements 1 are covered with the mesh 9 made of FRP, it was deemed that small fragments of the nonlinear resistive elements 1, which were destroyed by the short circuit current, were efficiently prevented from flying out from a gap of the insulation supporting elements.

Additionally, the reason why the excellent property for boiling resistance was obtained is considered as below. The surge arrester according to the first embodiment has a simple construction and especially, the insulative container 5 is made of a silicone resin having an excellent flow property by molding, so that it is possible that the surge arrester according to the first embodiment is easily molded into various forms without providing the excessive power to the inside of the surge arrester and the generation of the places where the infiltrated moisture is accumulated, such as the gaps and the air bubbles in the inside of the insulative container 5, is decreased. Thus, it can be seenthat the electric property of the surge arrester is not lowered even when it is soaked in the boiled water.

As shown in FIGS. 2A to 2C, in the case that the insulation supporting element 4, of which coefficient of thermal expansion is larger than that of the nonlinear resistive elements 1 made of a ceramic, is used, there is a possibility that the large compressing load is provided to the nonlinear resistive elements 1 depending on the expansion and contraction of the insulation supporting element 4 due to the change of the temperature. Thus, a plurality of plate springs 8b with various strengths are disposed between the electrode terminals 2 and the nonlinear resistive elements 1 in the surge arrester according to the first embodiment, so that the compression load resulted from the expansion and contraction of the insulation supporting element: 4 is capable of being absorbed by these plate springs 8b and the compression load to be applied to the nonlinear resistive elements 1 is capable of being appropriately managed. By using the plate springs 8b like those in the first embodiment, there is an advantage such that the height and the dimension of the surge arrester are not much influenced.

Further, according to the first embodiment, since the mesh 9 and the insulation supporting elements 4, which are disposed around the nonlinear resistive elements 1, are made of the FRP, there is an advantage such that the insulation supporting strength in the inside of the surge arrester can be improved.

The surge arrester according to the first embodiment is constructed simply in such a manner that the insulation supporting elements 4 are disposed around the nonlinear resistive elements 1 and the insulative container 5 made of a liquid silicone resin having a good flow property is formed by molding around the insulation supporting elements 4 and the construction for fixing the insulation supporting elements 4 around the electrode terminals 2 by the use of the plate screw 6 is also simple, so that the surge arrester is capable of being composed very easily.

### (Effect)

As described above, according to the first embodiment, by fixing the slender and plate type insulation supporting elements 4 made of the FRP around the electrode terminals 2 and forming the space 3, which extends to the axial direction of the surge arrester, it is possible to discharge the inner pressure sufficiently from the space 3 even when the nonlinear resistive elements 1 are damaged depending on the excessive voltage and the earth fault current flows through the inside of the surge arrester. Therefore, there is no possibility that the surge arrester bursts up and is shattered. Additionally, by forming the insulative container 5 by the use of a silicone with an excellent flow property, the gaps and air bubbles in an inside of the surge arrester can be decreased, so that there is no moisture to insert in the inside of the surge arrester under the harsh conditions. Therefore, according to the first embodiment, it is possible to provide the safety surge arrester having an excellent discharge pressure property, an excellent property for boiling resistance and a high reliability for long duration.

### [Modified Examples]

Alternatively, as a modified example of the first embodiment as described above, according to the invention of claim 7, applying an epoxy coating on a side face of the nonlinear resistive elements 1 may be considered. The change of the electric property was further smaller than that of the first embodiment except for the nonlinear resistive elements 1 when the same salt water boiling test was carried out with respect to the surge arrester having the same construction as the first embodiment. Additionally, according to the invention as another modified example of the first embodiment, applying an epoxy coating not only on a side face of the nonlinear resistive elements 1, but also to the all elements of the inside of the surge arrester composed of the nonlinear resistive elements 1 and the electrode terminals 2 except for the current carrying portions and to the periphery of the insulation supporting elements 4 may also be considered. In regard to the portions except for the above portions, the further excellent results were obtained such that there is little or nothing lowering of the electric property when the same salt water boiling test was carried out with respect to the surge arrester having the same construction as the first embodiment.

As described above, the reason why the results of the salt water boiling test were excellent when applying an epoxy coating to the inside of the surge arrester may be roughly considered as below. Namely, it can be considered that, since an epoxy resin and a silicone resin have excellent adhesion properties, the gaps and the air bubbles, where the moisture is accumulated, are hardly generated in the inside of the surge arrester.

### [Second embodiment]

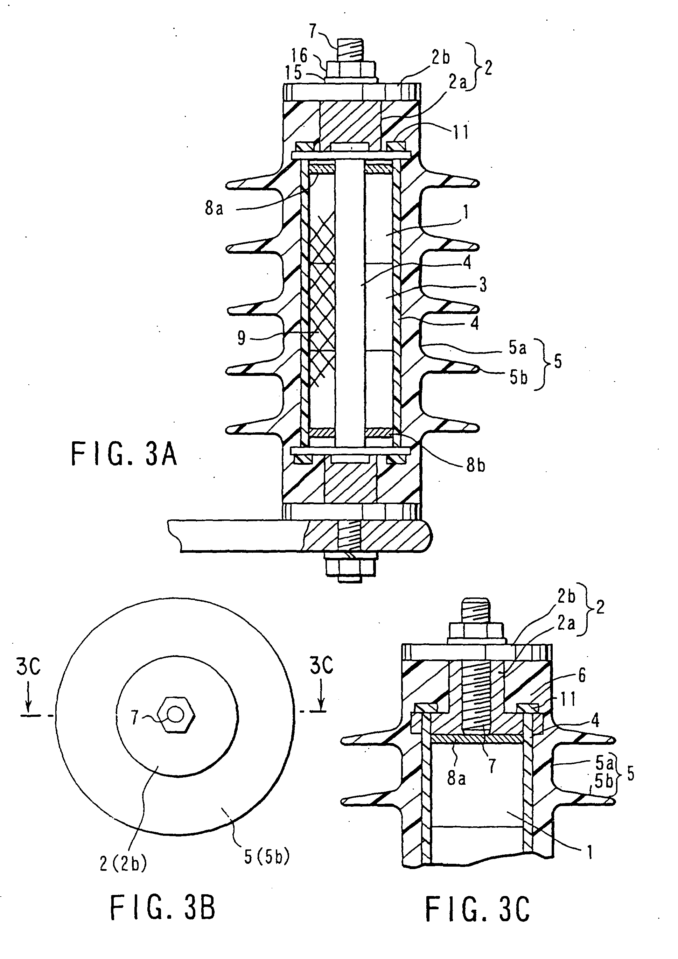

FIGS. 3A to 3C are views for showing an example of a surge arrester applying a second embodiment of the present invention. As shown in FIGS. 3A to 3C, the insulation supporting elements 4 and the fixing portions 2a of the electrode terminals 2 are fixed by fitting prominences 11, which are disposed on the opposite edges of the insulation supporting elements 4, with holes, which are defined in the fixing portions 2a of the electrode terminals 2 in place of the usage of the bolts 6 in the surge arrester according to the first embodiment. Alternatively, the portions except for the above are constructed in the same way as those of the first embodiment.

When manufacturing the surge arrester of the present embodiment having such a construction and carrying out the same short circuit test and the same salt water boiling test, the excellent results were obtained in the same way. Therefore, according to the present embodiment, the same effect as that of the first embodiment can be obtained. Additionally, according to the present embodiment, there is an advantage such that it has a good economical efficiency and a good operability since few parts are required and no step for a bolt fixation is required in the case that the fixing method by the use of fitting is employed. Alternatively, as a modified example of the present embodiment, it may be considered that the adhesive is applied to the fitting portion between the electrode terminals 2 and the insulation supporting elements 4 so that they are bonded. Also, in this case, a good result was obtained when the surge arrester was manufactured in actual and the same test was carried out.

### [Third embodiment]

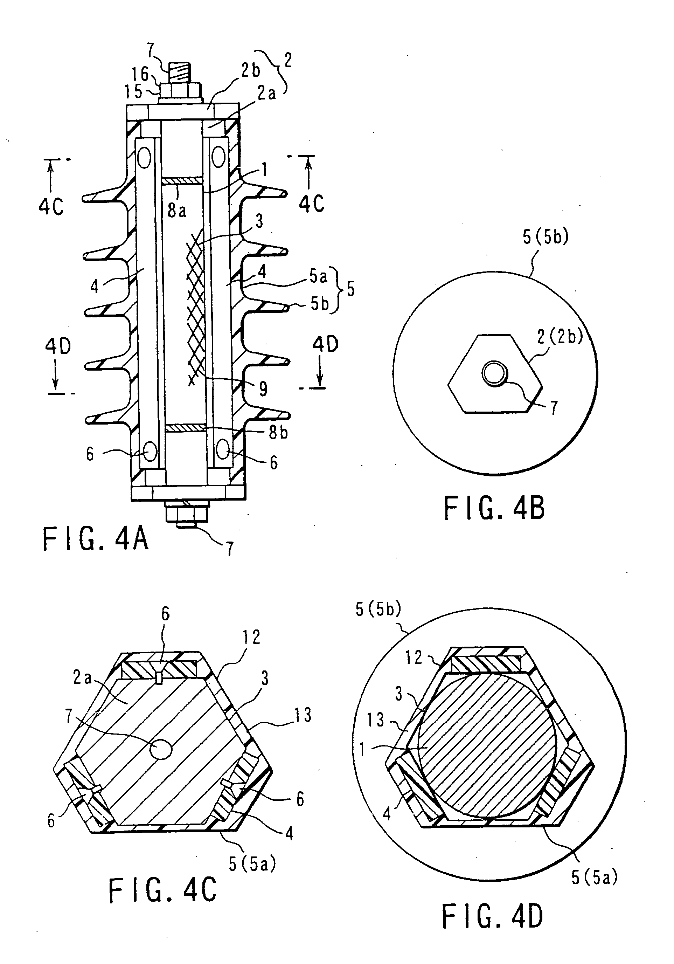

As shown in FIGS. 4A to 4D, a third embodiment of the present invention has a construction such that the outline of the electrode terminals 2 are regular polygon, ing., e.g. regular hexagon and the insulative containers thereof 5 are polygon e.g., hexagon and the insulation supporting elements 4 are disposed for every other side of the polygon which is an electrode terminal.

More particularly, the thickness of a silicone resin in a portion, in which the insulation supporting element 4 is not interposed, is thinner than the thickness of a silicone resin in a portion, in which the insulation supporting element 4 is interposed, with respect to the thickness of a silicone resin between the nonlinear resistive elements 1 and surfaces of the insulative containers 5 (a thinner silicone resin layer 13). In this case, even the thinnest portion of the thinner silicone resin layer 13 is in the range of 2 to 5 mm. Other portions except for this are constructed in the same way as the first embodiment. If the polygon approximates a circle, the thickness of a resin in a side portion 12 (i.e. the thickness of the silicone resin layer 13), in which the insulation supporting element 4 is not interposed, is thicker compared with the thickness of the resin in a side portion, in which the insulation supporting element 4 is interposed, by the thickness of the insulation supporting element 4. Therefore, a triangle shown in FIGS. 4A to 4D is particularly desirable among the polygons in regard to the construction and the manufacturability. However, if the polygon is a square (not illustrated), cutting off the opposite edges of the insulation supporting elements 4, it is possible to make the thickness of the resin of the side portion 12, in which the insulation supporting element 4 is not interposed, i.e., the thickness of the silicone resin layer 13, thinner from the view of the construction.

When manufacturing a surge arrester of the present embodiment, which is constructed in the above manner, in actual and carrying out the same short circuit test and the same salt water boiling test (with respect to three points, i.e., 3 kV, 77 kV, 154 kV), the good results were obtained in the same way. Particularly, in the short circuit test, the excellent result was obtained, since the thinner silicone resin layer 13 is applied to the side portion 12 of the space 3, in which the insulation supporting element 4 is not interposed, in the polygonal insulative containers 5. In other words, in the short circuit test, even when the nonlinear resistive elements 1 is damaged due to the excessive operation and further, the inner pressure of the surge arrester is increased depending on the gas in accordance with the generation of the arc, it was possible to prevent the surge arrester from bursting up and being shattered, since the thinner silicone resin layer 13 in the space 3 is tore, the gas blows off and the insulative containers 5 are partially destroyed.

Accordingly, according to the third embodiment, it is also possible to improve the discharge pressure property in addition to obtaining the same effect as that of the first embodiment. Alternatively, as a modified example of the present embodiment, a construction may be considered such that the insulation supporting elements 4 are disposed on the vertexes of the polygon so that the thickness of the silicone resin in the side portion of the polygon is thinner. Also, in this case, when manufacturing a surge arrester of the present embodiment in actual and carrying out the same short circuit test and the same salt water boiling test, the good results were obtained in the same way. Alternatively, also, in the case that the insulation supporting elements 4 are disposed on side portions of the polygon and the insulation supporting elements 4 are disposed on the vertexes of the polygon, the thickness of the silicone resin is desirable in the range of 2 to 5 mm at the thinnest portion of the polymer of the entire surge arrester. This is the reason why the polymer of the thickness less than 2 mm is easily damaged and the inner pressure rises in the polymer of the thickness more than 5 mm upon carrying the short circuit current. Alternatively, when molding the insulative container 5 with a silicone resin, preparing a silicone rubber in a lope shape, which extends upwardly and downwardly in an appropriate position of the silicone resin layer 13 in advance, the surge arrester may be manufactured so as to include the above lope-shaped silicone rubber as well as molding the insulative container 5. In this case, since the silicone rubber is made of the same material of a silicone resin, the same finished product is obtained compared with the case that the lope-shaped silicone rubber is not prepared. However, in the case that the lope-shaped silicone rubber is prepared, since a boundary face is defined on its surface, the above boundary face is capable of being a start point for discharging the pressure. Therefore, it becomes possible to prevent the surge arrester from bursting up and being shattered. Although the disposing position of the lope-shaped silicone rubber may be any place of the silicone resin layer 13 if it can be a start point for discharging the pressure, it is desirable that the lope-shaped silicone rubber is disposed in the vicinity of a center of the silicone resin layer 13. This is the reason why it becomes easier to discharge the pressure as the lope-shaped silicone rubber is disposed closer to a center of the silicone resin layer 13. Alternatively, a portion having prominences such that their diameters gradually increase may be disposed on a portion of the side portion 12, which is a spacer between the nonlinear resistive elements and in which the insulation supporting elements 4 are not infiltrated. In this case, if the insulative container 5 is molded by the silicone resin, the silicone rubber covering this prominent portion becomes thinner, so that the silicone rubber covering this prominent portion becomes a start point for discharging the pressure and further, it becomes possible to prevent the surge arrester from being bursting up and being shattered.

### [Fourth embodiment]

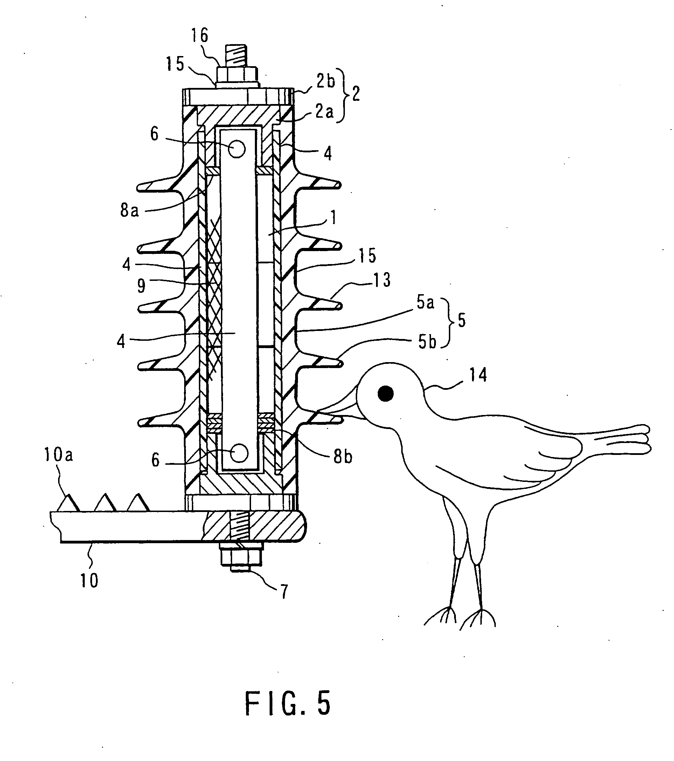

As shown in FIG. 5, according to the fourth embodiment, the insulative containers 5 have cap portions, of which length is not less than 5 cm and of which spacing is not more than 5 cm and concave-convex portions 10a including the angle portion are disposed on an arm 10 of a bracket. The other portions except for this are constructed in the same way as the first embodiment.

When manufacturing a surge arrester of the fourth embodiment, which is constructed in the above manner, in actual and carrying out the same short circuit test and the same salt water boiling test, the good results were obtained in the same way. Therefore, the same result as that of the first embodiment is capable of being obtained according to the fourth embodiment. Particularly, in the forth embodiment, the length and the spacing of the cap portions 5b of the insulative containers 5 are defined appropriately, so that it is possible to prevent a pecker of a bird 14, which has the habit of pecking something like a trunk of a tree in a columnar shape with an appropriate flexibility, from reaching to a drum of the insulative container 5. Further, since the convaco-convex portions 10a including the angle portion are disposed on an arm 10 of a bracket, to which the surge arrester is disposed, it is possible to physically prevent the birds from settling on the vicinity of the insulative containers 5. Therefore, the damage of the surged arrester by the birds and the contamination thereof by the feces of the birds are capable of being prevented by a synergy effect and it is possible to avoid a possibility that the moisture is infiltrated within the surge arrester. The reason why the length and the spacing of the cap portions 5a are defined as described above is that there is a possibility that the bird pecks the drum portion 5a if the length and the spacing of the cap portions 5a deviate from this range, so that the effect depending on setting the dimension cannot be obtained.

Further, the invention in accordance with the invention set forth may be considered as a modified example of the fourth embodiment. In other words, it may be also considered that a pattern so as to visually prevent the bird from approaching to the surged arrester is displayed on the surfaces of the insulative containers 5, such as a mesh pattern, a pattern such that complementary colors are distributed alternatively and a pattern representing a natural enemy of potential birds which may come by air. Specifically, picturing a pattern, a face and an eye or the like of a snake, which is a natural enemy of the bird, on the surfaces of the insulative containers 5 may be considered. In any case, it is possible to visually prevent the bird from approaching to the surge arrester by displaying a pattern with a color, which does not exist naturally, or a pattern and a color of a natural enemy of the bird such that the bird is visually surprised, so that the bird cannot approach to the surge arrester. As a result, it is possible to prevent the damage and the contamination of the surge arrester by the bird and the feces of the bird.

### [Other embodiment]

The present invention is not limited to respective embodiments as described above. However, the present invention may be applied to various embodiments within a scope of the present invention in addition to the above described embodiments. In other words, as long as the surge arrester contains the features of claim 1, the constitution of the nonlinear resistive element and the insulation supporting element, the detailed constitution of the insulative container or the like and the constitutions of the other portions may be freely selected. In any case, the excellent effect is capable of being obtained in the same way as the above described embodiments.

According to the above described embodiments, although a section which is orthogonalized with respect to an axial is exemplified as the nonlinear resistive elements 1 to explain the nonlinear resistive element, the nonlinear resistive element may not be limited to this but it may be an any form such as an ellipse, a triangle, a rectangular and a polygon. Additionally, it is exemplified and explained that a plurality of the nonlinear resistive elements 1 are stacked in a layer in a predetermined direction. However, without being limited to this, an example such that one nonlinear resistive element 1 is disposed may be applied to the present invention.

## Claims

1. A surge arrester comprising:
at least one nonlinear resistive element (1) made mainly of zinc oxide and having two ends and one axis;
at least two electrode terminals (2) electrically connected to the two ends of said at least one nonlinear resistive element (1), respectively;
a plurality of elongated insulating supports (4) arranged around the at least one nonlinear resistive element (1), extending parallel to the axis of the at least one nonlinear resistive element (1) and spaced apart from one another, each insulating support (4) having both ends secured to the electrode terminals (2); and
a molded insulating container (5) made of silicone resin, surrounding the at least one nonlinear resistive element (1) and the insulating supports (4), and exposing parts of the electrode terminals (2);
**characterized in that**
the at least one nonlinear resistive element (1) is covered with a mesh (9) made of a fiber reinforced plastic.

2. The surge arrester according to claim 1, **characterized in that** the insulating supports (4) are secured to the electrode terminals (2) by bolts, projections protruding from the ends of the insulating support (4) and holes made in the electrode terminals (2) or in that the insulating supports (4) are bonded to the electrode terminals (2).

3. The surge arrester according to claim 1 or 2, **characterized in that** a metal plate (8a) is interposed between at least one of the electrode terminals (2) and the at least one nonlinear resistive element (1), the at least one of the electrode terminals (2) has a screw hole, and a screw is set in screw (7) engagement with the screw hole and functions as a jack when rotated to push the metal plate (8a).

4. The surge arrester according to any one of claims 1 to 3, **characterized in that** a plurality of springs (8b) of different strengths are provided between one of the electrode terminals (2) and the at least one nonlinear resistive element (1) for absorbing compressed load acting on the at least one nonlinear resistive element (1) with expansion and contraction of said insulating supports (4).

5. The surge arrester according to any one of claims 1 to 4, **characterized in that** the insulating supports (4) are made of fiber reinforced plastic.

6. The surge arrester according to claim 1, **characterized in that** the insulating supports (4) are of a slender and plate type and have rigidity.

7. The surge arrester according to any one of claims 1 to 6, **characterized in that** a molded epoxy resin layer covers the circumferential surface of the at least one nonlinear resistive element (1), each of the electrode terminals (2) except that part thereof to which an electric current is supplied, and the circumferential surface of each of the insulating supports (4).

8. The surge arrester according to any one of claims 1 to 7, **characterized in that** the insulating container (5) has a substantially polygonal cross section, and the insulating supports (4) are arranged at every other side or every other apex of the substantially polygonal cross section.

9. The surge arrester according to claim 8, **characterized in that** each side of the insulating container (5) that contacts one insulating support (4) is thicker than any other side of the insulating container (5).

10. The surge arrester according to claim 8, **characterized in that** each side of the insulating container (5) that contacts one insulating support (4) has a thickness of 2 to 5 mm at the thinnest part.

11. The surge arrester according to any one of claims 1 to 10, **characterized in that** annular fins (5b) are provided on an outer circumferential surface of the insulating container (5), are arranged at intervals of at most 5 cm in an axial direction of the insulating container (5), and have a width of at least 5 cm.

12. The surge arrester according to any one of claims 1 to 11, **characterized in that** a pattern representing a natural enemy of birds that may fly toward the arrester is provided on an outer circumferential surface of the insulating container (5).

13. The surge arrester according to any one of claims 1 to 12, **characterized by** further comprising a bracket (10) for fastening the arrester to a pole, said bracket having a plurality of pyramidal projections (10a) on one surface.

## Patentansprüche

1. Überspannungsableiter mit:
zumindest einem nicht-linearen Widerstandselement (1), das hauptsächlich aus Zinkoxid hergestellt ist und zwei Enden sowie eine Achse aufweist,
zumindest zwei Elektrodenanschlüssen (2), die jeweils elektrisch mit den zwei Enden des mindestens einen nicht-linearen Widerstandselements (1) verbunden sind,
mehreren länglichen isolierenden Halterungen (4), die um das mindestens eine nicht-lineare Widerstandselement (1) herum angeordnet sind, sich parallel zu der Achse des mindestens einen nicht-linearen Widerstandselements (1) erstrecken und voneinander beabstandet sind, wobei jede isolierende Halterung (4) beide Enden an den Elektrodenanschlüssen (2) festgelegt hat, und
einem geformten isolierenden Behälter (5) aus Silikonharz, der das mindestens eine nicht-lineare Widerstandselement (1) und die isolierenden Halterungen (4) umgibt und Teile der Elektrodenanschlüsse (2) freilässt,
**dadurch gekennzeichnet, dass**
das mindestens eine nicht-lineare Widerstandselement (1) mit einem Netz bzw. einem Gewebe (9) aus faserverstärktem Kunststoff bedeckt ist.

2. Der Überspannungsableiter gemäß Anspruch 1, **dadurch gekennzeichnet, dass** die isolierenden Halterungen (4) an den Elektrodenanschlüssen (2) durch Bolzen bzw. Schrauben, durch von den Enden der isolierenden Halterung (4) vorstehenden Vorsprüngen und in den Elektrodenanschlüssen (2) vorgesehenen Löchern, oder dadurch, dass die isolierenden Halterungen (4) an den Elektrodenanschlüssen (2) angeklebt bzw. an diese gebondet sind, festgelegt sind.

3. Der Überspannungsableiter gemäß Anspruch 1 oder 2, **dadurch gekennzeichnet, dass** eine Metallplatte (8a) zwischen zumindest einen der Elektrodenanschlüsse (2) und dem mindestens einen nicht-linearen Widerstandselement (1) eingefügt ist, wobei der mindestens eine der Elektrodenanschlüsse (2) ein Schraubenloch besitzt, und eine Schraube in Schraubeingriff (7) mit dem Schraubenloch eingesetzt ist und als eine Hebevorrichtung wirkt, wenn sie zum Drücken der Metallplatte (8a) gedreht wird.

4. Der Überspannungsableiter gemäß einem der Ansprüche 1 bis 3, **dadurch gekennzeichnet, dass** mehrere Federn (8b) unterschiedlicher Stärken zwischen einem der Elektrodenanschlüsse (2) und dem mindestens einen nicht-linearen Widerstandselement (1) zum Absorbieren einer auf das mindestens eine nicht-lineare Widerstandselement (1) wirkenden Drucklast bei Expansion und Kontraktion der isolierenden Halterungen (4) wirkenden Drucklast vorgesehen sind.

5. Der Überspannungsableiter gemäß einem der Ansprüche 1 bis 4, **dadurch gekennzeichnet, dass** die isolierenden Halterungen (4) aus faserverstärktem Kunststoff gemacht sind.

6. Der Überspannungsableiter gemäß Anspruch 1, **dadurch gekennzeichnet, dass** die isolierenden Halterungen (4) von einem schlanken und plattenartigen Typ sind und Steifigkeit besitzen.

7. Der Überspannungsableiter gemäß einem der Ansprüche 1 bis 6, **dadurch gekennzeichnet, dass** eine geformte Epoxidharzschicht die Umfangsfläche des mindestens einen nicht-linearen Widerstandselements (1), jeden der Elektrodenanschlüsse (2) mit Ausnahme des Teils davon, an dem ein elektrischer Strom zugeführt wird, und die Umfangsfläche jeder der isolierenden Halterungen (4) bedeckt.

8. Der Überspannungsableiter gemäß einem der Ansprüche 1 bis 7, **dadurch gekennzeichnet, dass** der isolierende Behälter (5) einen im wesentlichen polygonalen Querschnitt besitzt und die isolierenden Halterungen (4) an jeder zweiten Seite oder jedem zweiten Scheitel des im wesentlichen polygonalen Querschnitts angeordnet sind.

9. Der Überspannungsableiter gemäß Anspruch 8, **dadurch gekennzeichnet, dass** jede Seite des isolierenden Behälters (5), die eine isolierende Halterung (4) kontaktiert, dicker ist als jede andere Seite des isolierenden Behälters (5).

10. Der Überspannungsableiter gemäß Anspruch 8, **dadurch gekennzeichnet, dass** jede Seite des isolierenden Behälters (5), die eine isolierende Halterung (4) kontaktiert, eine Dicke von 2 bis 5 mm an dem dünnsten Teil besitzt.

11. Der Überspannungsableiter gemäß einem der Ansprüche 1 bis 10, **dadurch gekennzeichnet, dass** ringförmige Rippen (5b) an einer Außenumfangsoberfläche des isolierenden Behälters (5) vorgesehen sind, in Intervallen von höchstens 5 cm in einer Axialrichtung des isolierenden Behälters (5) angeordnet sind, und eine Breite bzw. Weite von mindestens 5 cm aufweisen.

12. Der Überspannungsableiter gemäß einem der Ansprüche 1 bis 11, **dadurch gekennzeichnet, dass** ein Muster, welches einen natürlichen Feind von Vögeln, welche auf den Ableiter zufliegen können, darstellt, an einer Außenumfangsoberfläche des isolierenden Behälters (5) vorgesehen ist.

13. Der Überspannungsableiter gemäß einem der Ansprüche 1 bis 12, **dadurch gekennzeichnet, dass** er ferner eine Halterung bzw. Klammer (10) zum Befestigen des Ableiters an einem Mast besitzt, wobei die Halterung mehrere pyramidenförmige Vorsprünge (10a) an einer Oberfläche besitzt.

## Revendications

1. Limiteur de surtension comportant :
au moins un élément résistif non linéaire (1) composé principalement d'oxyde de zinc et ayant deux extrémités et un axe ;
au moins deux bornes d'électrode (2) reliées électriquement aux deux extrémités dudit au moins un élément résistif non linéaire (1), respectivement ;
une multiplicité de supports isolants allongés (4) disposés autour du au moins un élément résistif non linéaire (1), s'étendant parallèlement à l'axe du au moins un élément résistif non linéaire (1) et espacés l'un de l'autre, chaque support isolant (4) ayant les deux extrémités fixées sur les bornes d'électrode (2) ; et
un réceptacle isolant moulé (5) fabriqué en résine silicone, entourant le au moins un élément résistif non linéaire (1) et les supports isolants (4), et exposant des parties des bornes d'électrode (2) ;
**caractérisé en ce que**
le au moins un élément résistif non linéaire (1) est recouvert d'une toile (9) fabriquée en matière plastique renforcée de fibre.

2. Limiteur de surtension selon la revendication 1, **caractérisé en ce que** les supports isolants (4) sont fixés sur les bornes d'électrode (2) par des boulons, des saillies dépassant des extrémités des supports isolants (4) et des trous faits dans les bornes d'électrode (2) ou **en ce que** les supports isolants sont collés sur les bornes d'électrode (2).

3. Limiteur de surtension selon la revendication 1 ou 2, **caractérisé en ce que** une plaque métallique (8a) est interposée entre au moins une des bornes d'électrode (2) et le au moins un élément résistif non linéaire (1), la au moins une des bornes d'électrode (2) a un trou de vis, et une vis est placée en engagement vissé (7) avec le trou de vis et fonctionne comme un vérin lorsqu'elle est entraînée en rotation afin de pousser la plaque métallique (8a).

4. Limiteur de surtension selon l'une quelconque des revendications 1 à 3, **caractérisé en ce que** une multiplicité de ressorts (8b) de différentes forces est prévue entre une des bornes d'électrode (2) et le au moins un élément résistif non linéaire (1) afin d'absorber une charge de compression agissant sur le au moins un élément résistif non linéaire (1) avec une dilatation et une contraction desdits supports isolants (4).

5. Limiteur de surtension selon l'une quelconque des revendications 1 à 4, **caractérisé en ce que** les supports isolants (4) sont fabriqués en matière plastique renforcée de fibre.

6. Limiteur de surtension selon la revendication 1, **caractérisé en ce que** les supports isolants (4) sont d'un type mince et à plaque et présentent une rigidité.

7. Limiteur de surtension selon l'une quelconque des revendications 1 à 6, **caractérisé en ce qu'**une couche de résine époxy moulée recouvre la surface circonférentielle du au moins un élément résistif non linéaire (1) de chacune des bornes d'électrode (2) à l'exception d'une partie à laquelle un courant électrique est délivrée, et la surface circonférentielle de chacun des supports isolants (4).

8. Limiteur de surtension selon l'une quelconque des revendications 1 à 7, **caractérisé en ce que** le réceptacle isolant (5) a une section transversale essentiellement polygonale, et les supports isolants (4) sont disposés sur chaque autre côté ou chaque autre sommet de la section transversale essentiellement polygonale.

9. Limiteur de surtension selon la revendication 8, **caractérisé en ce que** chaque côté du réceptacle isolant (5) qui entre en contact avec un support isolant (4) est plus épais que n'importe quel autre côté du réceptacle isolant (5).

10. Limiteur de surtension selon la revendication 8, **caractérisé en ce que** chaque côté du réceptacle isolant (5) qui entre en contact avec un support isolant (4) a une épaisseur de 2 à 5 mm au niveau de la partie la plus mince.

11. Limiteur de surtension selon l'une quelconque des revendications 1 à 10, **caractérisé en ce que** des ailettes annulaires (5b) sont prévues sur une surface circonférentielle externe du réceptacle isolant (5), sont disposées à des intervalles de au plus 5 cm dans une direction axiale du réceptacle isolant (5), et ont une largeur d'au moins 5 cm.

12. Limiteur de surtension selon l'une quelconque des revendications 1 à 11, **caractérisé en ce que** un dessin représentant un ennemi naturel des oiseaux qui peuvent voler vers le limiteur est prévu sur une surface circonférentielle externe du réceptacle isolant (5).

13. Limiteur de surtension selon l'une quelconque des revendications 1 à 12, **caractérisé en ce qu'**il comporte en outre un support (10) pour la fixation du limiteur sur un poteau, ledit support ayant une multiplicité de saillies pyramidales (10a) sur une surface.
